# EUROPÄISCHE PATENTSCHRIFT

(11) **EP 1 083 091 B1**
(45) Veröffentlichungstag und Bekanntmachung des Hinweises auf die Patenterteilung: **09.04.2003**
(21) Anmeldenummer: 00116580.2
(22) Anmeldetag: 01.08.2000
(51) Int. Cl.: B60R 7/04, B65D 25/06

(54) **Ablagefach für einen Behälter insbesondere in einem Kraftwagen**
Storage compartment for a container, especially in a motor vehicle
Compartiment d'emmagasinage d'un conteneur, notamment dans un véhicule

(30) Priorität: 07.09.1999 DE 19942629
(43) Veröffentlichungstag der Anmeldung: 14.03.2001
(73) Patentinhaber: Fischerwerke Arthur Fischer GmbH & Co. KG, 72178 Waldachtal (DE); Bayerische Motoren Werke Aktiengesellschaft, 80788 München (DE)
(72) Erfinder: Heine, Daniel, 72280 Dornstetten (DE); Widulle, Rüdiger, 81547 München (DE)

(56) Entgegenhaltungen:
- DE-C- 4 006 487
- US-A- 4 809 897
- US-A- 5 794 952

## Beschreibung

Die Erfindung betrifft ein Ablagefach für einen Behälter insbesondere in einem Kraftwagen mit den Merkmalen des Oberbegriffs des Anspruchs 1. Das Ablagefach ist insbesondere zur Anbringung an einer Innenseite einer Seitenwand des Behälters vorgesehen, wobei der Behälter beispielsweise unter einer Mittelarmlehne im Kraftwagen untergebracht sein kann. Das Ablagefach ist beispielsweise zur Aufbewahrung von Kleinteilen in dem größeren Behälter vorgesehen.

Aus der DE 4006487 C1 ist ein Ablagefach für einen Behälter bekannt, wobei das Ablagefach an einer Innenseite einer Seitenwand des Behälters anbringbar ist, das Ablagefach einen Boden aufweist, der mittels eines Schwenkgelenks aus einer in etwa horizontalen in eine in etwa vertikale Stellung schwenkbar ist, das Ablagefach eine Wand aufweist, die mittels eines Schwenkgelenks schwenkbar am Boden angebracht ist und aus einer am Boden anliegenden in eine vom Boden abstehende Stellung schwenkbar ist.

Der Erfindung liegt die Aufgabe zugrunde, das Ablagefach platzsparend in dem größeren Behälter unterzubringen.

Diese Aufgabe wird erfindungsgemäß durch die Merkmale des Anspruchs 1 gelöst. Das erfindungsgemäße Ablagefach ist an die Innenseite der Seitenwand des Behälters, an der das Ablagefach angebracht ist, schwenkbar, so dass das Ablagefach bei Nichtgebrauch nur wenig Raum einnimmt. Zu diesem Zweck weist das erfindungsgemäße Ablagefach einen Boden auf, der mit einem Schwenkgelenk aus einer in etwa horizontalen, von der Seitenwand in den Behälter abstehenden Stellung in eine in etwa vertikale, an der Innenseite der Seitenwand des Behälters anliegende Stellung schwenkbar ist. Bei Nichtgebrauch wird der Boden an die Seitenwand des Behälters geschwenkt, so dass das gesamte Volumen des Behälters als Stauraum zur Verfügung steht.

Am Boden des Ablagefachs ist mit einem Schwenkgelenk eine Wand des Ablagefachs schwenkbar angebracht, die aus einer vom Boden abstehenden in eine am Boden anliegende Stellung schwenkbar ist. Bei Nichtgebrauch des Ablagefachs wird die Wand in Anlage an den Boden und der Boden in seine in etwa vertikal stehende Stellung verschwenkt.

Des Weiteren weist das erfindungsgemäße Ablagefach einen Antriebsmechanismus (Getriebe) auf, der die Schwenkbewegungen von Wand und Boden des Ablagefachs zwangsläufig miteinander koordiniert, so dass beim Schwenken des Bodens von der in etwa vertikalen in die in etwa horizontale Stellung die Wand des Ablagefachs aus der am Boden anliegenden in die vom Boden abstehende Stellung verschwenkt. Wird der Boden aus der in etwa horizontalen in die in etwa vertikale Stellung verschwenkt, verschwenkt der Antriebsmechanismus die Wand aus der vom Boden abstehenden in die am Boden anliegende Stellung. Die Erfindung hat den Vorteil, dass sie eine Unterteilungsmöglichkeit eines Behälters bietet, und dass sie eine ordentliche Aufbewahrung von Kleinteilen in einem größeren Behälter ermöglicht, wobei das erfindungsgemäße Ablagefach bei Nichtgebrauch platzsparend an der Innenseite einer Seitenwand des Behälters unterbringbar ist.

Bei einer Ausgestaltung der Erfindung weist der Antriebsmechanismus ein Kurvengetriebe auf. Bei einer Weiterbildung weist das Kurvengetriebe eine ortsfeste Führungsbahn in einer zu einer Schwenkachse des Bodens senkrechten Ebene auf. Die Führungsbahn verläuft bogenförmig in sich änderndem Abstand um die Schwenkachse des Bodens. Die Wand des Ablagefachs weist ein Führungselement, beispielsweise einen seitlich abstehenden Führungszapfen auf, der in die Führungsbahn eingreift. Durch das Kurvengetriebe ist eine Winkelstellung der Wand zum Boden des Ablagefachs abhängig vom Schwenkwinkel des Bodens, die Schwenkbewegung der Wand wird zwangsläufig von der Schwenkbewegung des Bodens abgeleitet, so dass die Wand vom Boden absteht, wenn dieser seine in etwa horizontale Stellung einnimmt, und so dass die Wand am Boden anliegt, wenn dieser seine in etwa vertikale Stellung einnimmt.

In bevorzugter Ausgestaltung der Erfindung weist der Boden des Ablagefachs eine Überlastsicherung auf, die den Boden in der in etwa horizontalen Stellung abstützt. Wird das Ablagefach überlastet, indem beispielsweise ein schwerer Gegenstand auf das Ablagefach aufgesetzt wird, gibt die Überlastsicherung nach, so dass der Boden nach unten wegklappen kann. Dadurch wird eine Zerstörung des Ablagefachs vermieden.

In bevorzugter Ausgestaltung wird der Boden des Ablagefachs federelastisch in die in etwa horizontale Stellung und die Wand in die vom Boden abstehende Stellung gedrückt. Bei Nichtgebrauch wird der Boden durch eine lösbare Halteeinrichtung in der in etwa vertikalen Stellung gehalten. Die lösbare Halteeinrichtung kann beispielsweise eine Schnappnase aufweisen, die elastisch zur Seite gedrückt wird, wenn der Boden aus der in etwa vertikalen Stellung in Richtung der horizontalen Stellung gedrückt wird. Nach Überwinden der Halteeinrichtung schwenkt der Boden federbeaufschlagt in seine in etwa vertikale Stellung. Auch an sich bekannte Push-Push- oder Herzkurven-Verriegelungseinrichtungen können als lösbare Halteeinrichtung Verwendung finden.

Die Erfindung wird nachfolgend anhand eines in der Zeichnung dargestellten Ausführungsbeispiels näher erläutert. Es zeigen:
- Figur 1: ein erfindungsgemäßes Ablagefach perspektivisch in Explosionsdarstellung;
- Figur 2: einen Querschnitt durch das Ablagefach aus Figur 1;
- Figur 3: einen Querschnitt gemäß Figur 2 bei Nichtgebrauch des Ablagefachs;
- Figur 4: einen Querschnitt gemäß Figur 2 bei Überbelastung des Ablagefachs; und
- Figur 5: einen Längsschnitt durch das Ablagefach aus Figur 1.

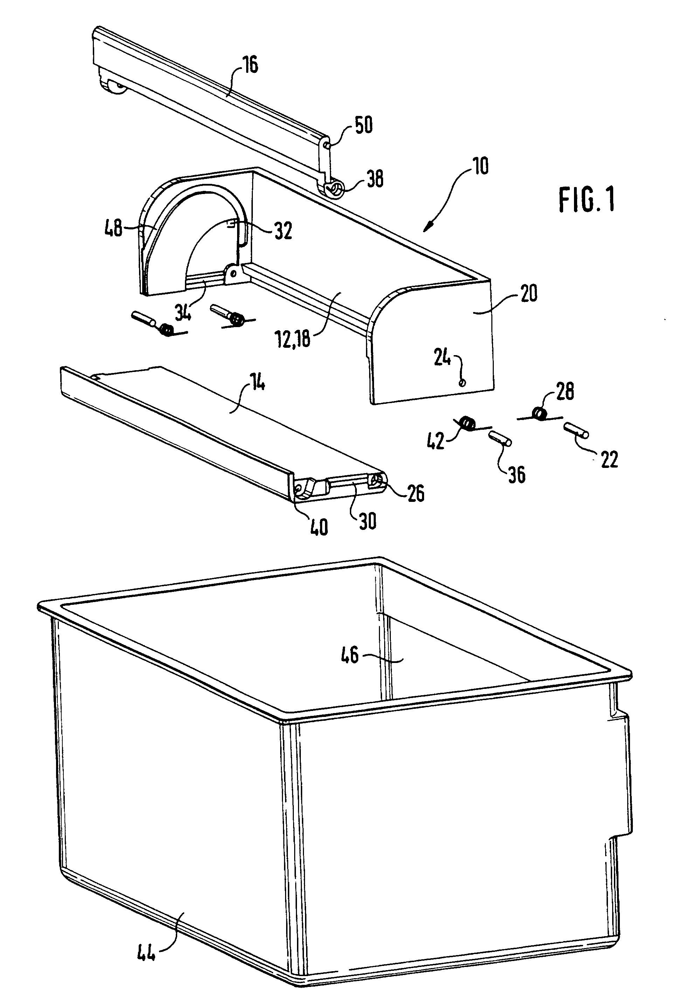

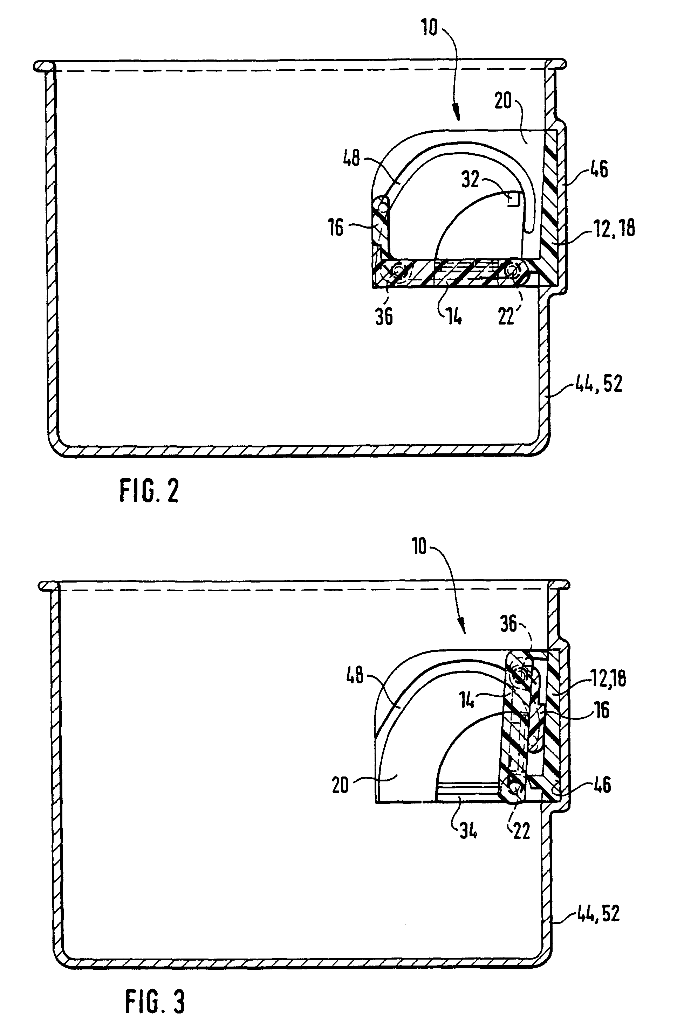

Das in Figur 1 in Explosionsdarstellung gezeichnete, erfindungsgemäße Ablagefach 10 weist im Wesentlichen einen Grundkörper 12, einen Boden 14 und eine Wand 16 auf, die als Spritzgießteile aus Kunststoff hergestellt sind. Der Grundkörper 12 weist eine Längswand 18 auf, von deren beiden Enden Stirnwände 20 abstehen. Der Boden 14 ist über ein Schwenkgelenk um 90° aus einer vertikalen, zur Grundplatte 12 parallelen Stellung in eine horizontale, rechtwinklig von der Grundplatte 12 abstehende Stellung schwenkbar. In der horizontalen Stellung befindet sich der Boden 14 an unteren Rändern der Stimwände 20. Das Schwenkgelenk wird von zwei Stiften 22 gebildet, die durch Löcher 24 in den Stirnwänden 20 des Grundteils 12 in Löcher 26 des Bodens 14 gesteckt sind. Die beiden Stifte 22 sind nahe der Längswand 18 und dicht über den unteren Rändern der Stirnwände 20 angeordnet, sie definieren eine zur Längswand 18 parallele Schwenkachse des Bodens 14. Auf die Stifte 22 sind Torsionsschraubenfedern 28 aufgesetzt, die sich, wie in Figuren 2 - 4 erkennbar, am Grundteil 12 abstützen und den Boden 14 in die horizontale Stellung drücken.

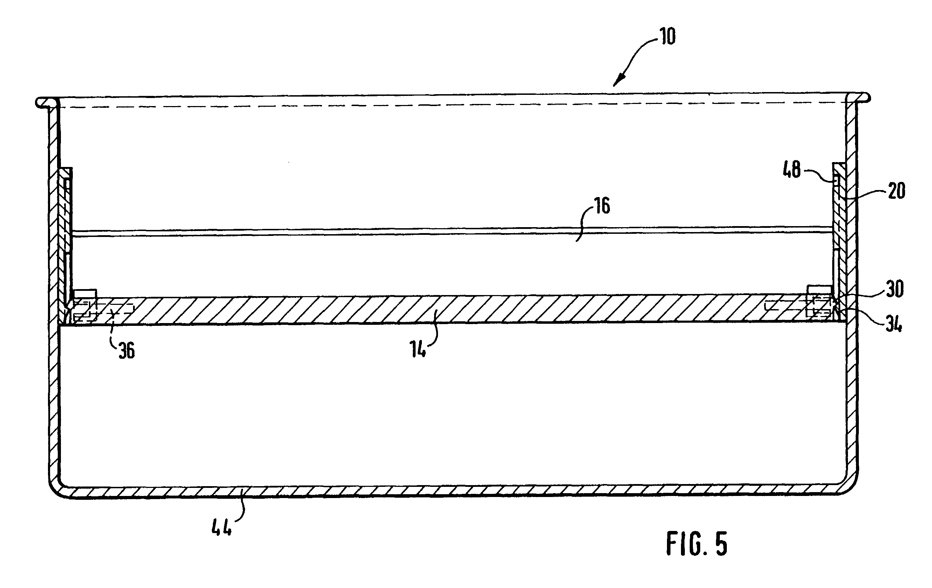

Der Boden 14 weist seitlich abstehende Rippen 30 auf, die in der vertikalen Stellung des Bodens mit Schnappnasen 32 an den einander zugewandten Innenseiten der Stirnwände 20 zusammenwirken und eine lösbare Halteeinrichtung 30, 32 bilden. In der horizontalen Stellung des Bodens 14 liegen die Rippen 30 auf Auflagerleisten 34 auf (vgl. Figur 5), die ebenfalls an den Innenseiten der Stirnwände 20 angeordnet sind und die zusammen mit den Rippen 30 eine Überlastsicherung 30, 34 des Ablagefachs 10 bilden.

Die Wand 16 ist um 90° schwenkbar aus einer am Boden 14 anliegende in eine vom Boden 14 abstehende Stellung schwenkbar mit dem Boden 14 verbunden. Zur schwenkbaren Verbindung weisen der Boden 14 und die Wand 16 ein Schwenkgelenk auf, welches von zwei Stiften 36 gebildet ist, die durch Löcher 38 in Laschen an Stirnseiten der Wand 16 in Löcher 40 im Boden 14 gesteckt sind. Eine Torsionsschraubenfeder 42 ist auf die Stifte 36 aufgesetzt. Die Torsionsschraubenfeder 42 stützt sich am Boden 14 ab und drückt die Wand 16 in die vom Boden 14 abstehende Stellung.

Das erfindungsgemäße Ablagefach 10 ist in einen schachtelförmigen Behälter 44 einsetzbar, der in einer Seitenwand eine Ausnehmung 46 zur Aufnahme der Längswand 18 des Grundteils 12 des Ablagefachs 10 aufweist.

An den Innenseiten der Stirnwände 20 sind Führungsbahnen 48 vorgesehen, die als Nuten ausgebildet sind und die in Bogenform (nicht unbedingt Kreisbogenform) um die Löcher 24 herum verlaufen, die die Schwenkachse des Bodens 14 definieren. Der Abstand der Führungsbahnen 48 von den Löchern 24 ändert sich, die Führungsbahnen 48 könnten als Abschnitte von Spiralen angesehen werden, die nahe der Löcher 24 beginnen und sich über einen Winkelabschnitt von unter 180° spiralförmig von den Löchern 24 entfernen. Mit Abstand von den Löchern 38 in ihren Laschen weist die Wand 16 seitlich abstehende Zapfen 50 auf, die Führungselemente bilden und in die Führungsbahnen 48 eingreifen. Die ortsfesten Führungsbahnen 48 und die Zapfen 50 bilden ein Kurvengetriebe 48, 50 für die schwenkbar mit dem Boden 14 verbundene Wand 16.

Die Funktion des erfindungsgemäßen Ablagefachs 10 wird nachfolgend anhand der Figuren 2 und 3 erläutert. Figur 2 zeigt das in den Behälter 44 eingesetzte Ablagefach 10 in einer Gebrauchsstellung. Die Längswand 18 am Grundkörper 12 des Ablagefachs 10 ist innen an einer Seitenwand 52 des Behälters 44 angebracht. Der Boden 14 steht rechtwinklig und horizontal von der Seitenwand 52 des Behälters 44 ins Innere des Behälters 44 ab. Der Boden 14 liegt mit seinen seitlichen Rippen 30 auf den Aulagerleisten 34 der Stirnwände 20 des Ablagefachs 10 auf, wobei die Torsionsschraubenfedern 28 den Boden 14 in Auflage auf die Auflagerleisten 34 drücken. Die schwenkbar mit dem Boden 14 verbundene Wand 16 steht senkrecht nach oben vom Boden 14 ab. Sie wird von den Torsionsschraubenfedern 42 in diese Lage gedrückt und von den Zapfen 50, die in die Führungsbahnen 48 eingreifen, in dieser Lage gehalten.

Wird das Ablagefach 10 nicht benötigt, kann es in die in Figur 3 dargestellte Nichtgebrauchsstellung verbracht werden. Dazu wird der Boden 14 gegen die Kraft der Torsionsschraubenfedern 28 nach oben in die in Figur 3 dargestellte, vertikale Stellung gedrückt. In der vertikalen Stellung besteht ein Zwischenraum zwischen dem Boden 14 und der Längswand 18, in dem die Wand 16 einliegt. Beim Schwenken des Bodens 14 nach oben wird die Wand 16, deren Zapfen 50 in den Führungsbahnen 48 gleiten, aus der vom Boden 14 senkrecht abstehenden in eine am Boden 14 anliegende Stellung zwischen dem Boden 14 und der Längswand 18 verschwenkt. Die Führungsbahnen 48 und die Zapfen 50 bilden ein Kurvengetriebe 48, 50, das die Wand 16 beim Verschwenken des Bodens 14 nach oben zwangsweise in Anlage an den Boden 14 verschwenkt. Wird der Boden 14 zurück in die horizontale Stellung verschwenkt, bewirken die Führungsbahnen 48 und die Zapfen 50 ein zwangsweises Verschwenken der Wand 16 in die senkrecht vom Boden 14 nach oben stehende Stellung.

In der vertikal nach oben geschwenkten Stellung wird der Boden 14 gegen die Federkraft der Torsionsschraubenfedern 28 von seinen seitlichen Rippen 30 gehalten, die an den Schnappnasen 32 der Stirnwände 20 einschnappen. Zum Verbringen in die Gebrauchsstellung wird der Boden 14 von der Längswand 18 abgedrückt, wobei durch elastische Verformung die Rippen 30 die Schnappnasen 32 überwinden und der Boden 14 anschließend durch Schwerkraft und durch die Torsionsfederelemente 28 in die horizontale Lage verschwenkt wird. Die Rippen 30 des Bodens 14 und die Schnappnasen 32 der Stimwände 20 bilden eine lösbare Halteeinrichtung 30, 32, die den Boden 14 gegen die Kraft der Torsionsschraubenfedern 28 in der vertikalen Stellung hält.

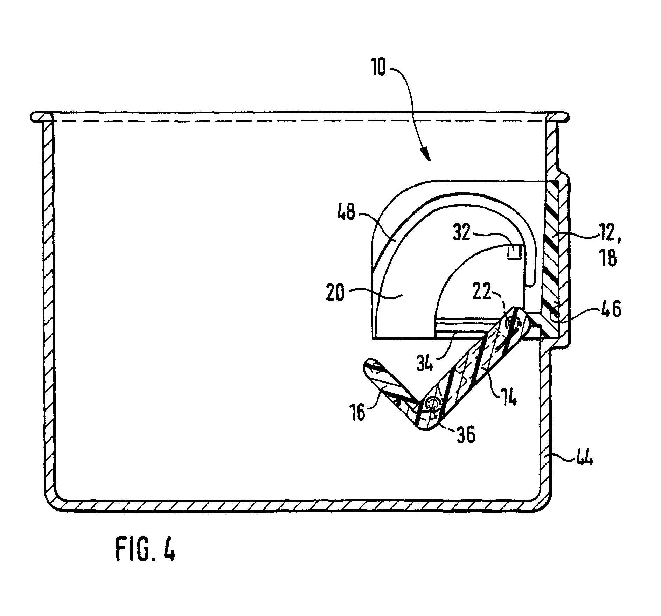

Wird die Wand 16 oder der Boden 14 des Ablagefachs 10 in der Gebrauchsstellung beispielsweise durch Aufsetzen eines schweren Gegenstandes überbelastet, übewinden die Rippen 30 des Bodens 14 durch elastische Verformung die Auflagerleisten 34 der Stirnwände 20 und der Boden 14 verschwenkt zusammen mit der Wand 16 wie in Figur 4 dargestellt über die horizontale Stellung hinaus nach unten. Die Rippen 30 des Bodens 14 bilden zusammen mit den Auflagerleisten 34 der Stirnwände 20 eine Überlastsicherung, die ein Wegklappen des Bodens 14 zusammen mit der Wand 16 nach unten bei Überbelastung ermöglichen. Nach der Überbelastung wird der Boden 14 nach oben gedrückt, bis seine Rippen 30 die Auflagerleisten 34 überwunden haben und das Ablagefach 10 ist wieder gebrauchsbereit.

## Patentansprüche

1. Ablagefach für einen Behälter insbesondere in einem Kraftwagen, wobei das Ablagefach an einer Innenseite einer Seitenwand des Behälters anbringbar ist, das Ablagefach (10) einen Boden (14) aufweist, der mittels eines Schwenkgelenks (22) aus einer in etwa horizontalen in eine in etwa vertikale Stellung schwenkbar ist, und das Ablagefach (10) eine Wand (16) aufweist, die mittels eines Schwenkgelenks (36) schwenkbar am Boden (14) angebracht ist und aus einer am Boden (14) anliegenden in eine vom Boden (14) abstehende Stellung schwenkbar ist, **dadurch gekennzeichnet dass** das Ablagefach (10) einen Antriebsmechanismus (48, 50) aufweist, der beim Schwenken des Bodens (14) aus der in etwa vertikalen in die in etwa horizontale Stellung die Wand (16) aus der am Boden (14) anliegenden in die vom Boden (14) abstehende Stellung und umgekehrt verschwenkt.

2. Ablagefach nach Anspruch 1, **dadurch gekennzeichnet, dass** der Antriebsmechanismus ein Kurvengetriebe (48, 50) aufweist.

3. Ablagefach nach Anspruch 2, **dadurch gekennzeichnet, dass** das Kurvengetriebe (48, 50) eine ortsfeste Führungsbahn (48) in einer zu einer Schwenkachse des Bodens (14) senkrechten Ebene aufweist, die bogenförmig und in sich änderndem Abstand um die Schwenkachse des Bodens (14) verläuft, und dass die Wand (16) des Ablagefachs (10) ein Führungselement (50) aufweist, welches mit Abstand von der Schwenkachse der Wand (16) angeordnet ist und mit der Führungsbahn (48) verschieblich in Eingriff steht.

4. Ablagefach nach Anspruch 1, **dadurch gekennzeichnet, dass** der Boden (14) eine Überlastsicherung (30, 34) aufweist, die den Boden (14) in der in etwa horizontalen Stellung abstützt und die bei Überbelastung des Bodens (14) den Boden (14) nach unten wegklappen lässt.

5. Ablagefach nach Anspruch 1, **dadurch gekennzeichnet, dass** das Ablagefach (10) ein Federelement (28), welches den Boden (14) in die in etwa horizontale Stellung drückt, und eine lösbare Halteeinrichtung (30, 32), die den Boden (14) gegen die Kraft des Federelements (28) in der in etwa vertikalen Stellung hält, aufweist.

6. Ablagefach nach Anspruch 1, **dadurch gekennzeichnet, dass** das Ablagefach (10) ein Federelement (42) aufweist, welches die Wand (16) in die vom Boden (14) abstehende Stellung drückt.

## Claims

1. A storage compartment for a container, especially in a motor vehicle, wherein the storage compartment is mountable on inner side of a side wall of the container, the storage compartment (10) comprises a bottom (14), which is pivotable by means of a hinged joint (22) out of an approximately horizontal position into an approximately vertical position, and the storage compartment (10) comprises a wall (16), which is pivotally mounted by means of a hinged joint (36) on the bottom (14) and is pivotable out of a position lying flat against the bottom (14) into a position projecting away from the bottom (14), **characterised in that** the storage compartment (10) comprises a driving mechanism (48, 50), which, as the bottom (14) is pivoted out of the approximately vertical position into the approximately horizontal position, pivots the wall (16) out of the position lying flat against the bottom (14) into the position projecting away from the bottom (14), and vice versa.

2. A storage compartment according to claim 1, **characterised in that** the driving mechanism comprises a cam mechanism (48, 50).

3. A storage compartment according to claim 2, **characterised in that** the cam mechanism (48, 50) comprises a fixed guideway (48) in a plane perpendicular to a pivot axis of the bottom (14), the guideway running in an arc and at a changing distance about the pivot axis of the bottom (14), and the wall (16) of the storage compartment (10) has a guide element (50), which is arranged at a distance from the pivot axis of the wall (16) and is in sliding engagement with the guideway (48).

4. A storage compartment according to claim 1, **characterised in that** the bottom (14) has an overload protection means (30, 34), which supports the bottom (14) in the approximately horizontal position and which, when the bottom (14) is overloaded, allows the bottom (14) to fold away downwards.

5. A storage compartment according to claim 1, **characterised in that** the storage compartment (10) includes a spring element (28), which presses the bottom (14) into the approximately horizontal position, and a releasable holding arrangement (30, 32), which holds the bottom (14) in the approximately vertical position against the force of the spring element (28).

6. A storage compartment according to claim 1, **characterised in that** the storage compartment (10) includes a spring element (42), which presses the wall (16) into the position projecting away from the bottom (14).

## Revendications

1. Casier de rangement destiné à un récipient, notamment dans une voiture, le casier de rangement pouvant être monté sur une face interne d'une paroi latérale du récipient, le casier de rangement (10) présentant un fond (14) lequel peut être basculé d'une position à peu près horizontale à une position à peu près verticale au moyen d'une articulation mobile (22), et le casier de rangement (10) présentant une paroi (16), laquelle est montée de manière à pouvoir basculer sur le fond (14) au moyen d'une articulation mobile (36) et qui peut être basculée d'une position en contact avec le fond (14) à une position éloignée du fond (14), **caractérisé en ce que** le casier de rangement (10) présente un mécanisme d'entraînement (48, 50), qui, lors de la bascule du fond (14) de la position à peu près verticale à la position à peu près horizontale, fait basculer la paroi (16) de la position en contact avec le fond (14) à la position éloignée du fond (14) et inversement.

2. Casier de rangement selon la revendication 1, **caractérisé en ce que** le mécanisme d'entraînement présente un mécanisme de transmission à cames (48, 50).

3. Casier de rangement selon la revendication 2, **caractérisé en ce que** le mécanisme de transmission à cames (48, 50) présente une glissière fixe (48) sur un plan perpendiculaire à axe de pivotement du fond (14), et qui se développe en arc et avec un écart variable par rapport à l'axe de pivotement du fond (14), et **en ce que** la paroi (16) du casier de rangement (10) présente un élément de guidage (50), lequel est placé en retrait de l'axe de pivotement de la paroi (16) et est en prise par glissement avec la glissière (48).

4. Casier de rangement selon la revendication 1, **caractérisé en ce que** le fond (14) présente une sécurité en cas de surcharge (30, 34) qui renforce le fond (14) dans la position à peu près horizontale et qui, en cas de surcharge du fond (14), rabat le fond (14) vers le bas.

5. Casier de rangement selon la revendication 1, **caractérisé en ce que** le casier de rangement (10) présente un élément à ressort (28), lequel presse le fond (14) dans la position à peu près horizontale, ainsi qu'un dispositif de maintien amovible (30, 32), lequel maintient le fond (14) contre la poussée de l'élément à ressort (28) dans la position à peu près verticale.

6. Casier de rangement selon la revendication 1, **caractérisé en ce que** le casier de rangement (10) présente un élément à ressort (42), lequel pousse la paroi(16) dans la position éloignée du fond (14).
